# EUROPEAN PATENT APPLICATION

(11) **EP 3 569 309 A1**
(43) Date of publication of application: **20.11.2019**
(21) Application number: 19386014.5
(22) Date of filing: 20.03.2019
(51) Int. Cl.: B01J 23/72, B01J 23/89, B01J 23/10, B01J 35/04, B01D 53/92, B01D 53/94, F01N 3/10, F01N 3/28

(54) **COPPER AND NOBLE METAL POLYMETALLIC CATALYSTS FOR ENGINE EXHAUST GAS TREATMENT**

(30) Priority: 20.03.2018 GR 20180100116
(71) Applicant: MONOLITHOS Catalysts & Recycling Ltd, 11476 Athens (GR)
(72) Inventor: Yakoumis, Iakovos, 114 76 Athens (GR)

(57) **Abstract**

The continuously stricter environmental regulations in the transportation emissions sector leads to an increase in noble metals (Pt, Pd, Rh) content in three-way catalytic converters, widely used in gasoline-fueled vehicles and thus, to a gradual increase in their supply and demand deficit. Consequently, noble metal prices rise resulting in an increase in the cost of three-way catalytic converters.

A novel low-cost catalyst is described herein for the abatement of the three toxic pollutant gases present in exhaust gases of gasoline-fueled vehicles: CO, NO ₓ and C ₓ H _{y} . The catalyst comprises mainly copper (Cu) and at least one of the noble metals selected from platinum, palladium, rhodium, iridium, ruthenium and gold, supported over mixed metal oxides comprising cerium oxide (CeO ₂ ) doped, stabilized, combined or mixed with at least one oxide of the transition metals selected from the list of Y, Pr, Sr, Sc, La, Ti, Zr, Gd, Nb, V, Sm, Nd and/or Tb, said support exhibiting high oxygen storage capacity. Comparative catalytic activity measurements between a catalyst from the proposed herein catalyst group and a commercial nobel metal -containing catalyst with high metal loading, have shown the high yield and commercial exploitation potential of the proposed herein catalysts.

## Description

The present invention describes a group of supported catalysts containing mainly copper and noble metals supported over ceramic carriers; rare earth oxides for the treatment of engine gaseous effluents under nearly stoichiometric conditions in order to effectively reduce carbon monoxide (CO), hydrocarbons (CₓH_{y}) and oxides of nitrogen (NOₓ).

Partial or complete replacement of noble metals in vehicle catalytic converters is of great economic and scientific interest. Although many research efforts have been made to replace noble metals with other low-cost metals, no successful commercial product has emerged so far, resulting in the use of exclusively noble metal -containing catalytic converters with continuously higher metal loading. Catalysts similar with the described herein catalyst group have been presented in the literature for the treatment of engine flue gases [1-5], but they fail to describe mixtures that are designed based on the ternary synergy between the copper, the noble metal/metals and the high ionic conductivity or oxygen storage capacity of the ceramic carrier in order to achieve high catalytic activity and selectivity.

In U.S. Patent No. 5,063,193 [1] entitled "Base metal automotive exhaust catalysts with improved activity and stability and method of making catalysts", the inventor describes a copper based catalyst supported on cerium oxide (CeO₂) and aluminum oxide (Al₂O₃) particles, to be used in catalytic flue gas treatment systems.

In U.S. Patent Application No. 2002/0131915 A1 [2] entitled "Platinum group metal promoted copper oxidation catalysts and methods for carbon monoxide remediation", the inventor describes a copper catalyst for the selective oxidation of CO, containing small amounts of one noble metal as an enhancer, supported on CeO₂. Its use is limited to removing CO from H₂ streams in low temperature fuel cell applications.

In U.S. Patent Application No. US 2011/0143921 A1 [3] entitled "Engine exhaust catalysts containing copper ceria", the inventor describes a catalytic converter exhibiting multiple catalytic layers, one of which contains Cu supported on CeO₂ to oxidize CO at low temperatures. Oxidation enthalpy causes local temperature rise and hence increases the catalytic activity of noble metals for the reduction of nitrogen oxides and the oxidation of hydrocarbons, highlighting the distinct roles of the individual catalysts.

In U.S. Patent No. 5,879,645 [4] entitled "Method for the removal of nitrogen oxides in the waste gas by selective catalytic reduction and catalyst for the reduction of nitrogen oxides", the inventor describes a catalyst for the reduction of nitrogen oxides consisting of a mixture of oxides of rare earths, alkalis and alkaline earth metals with transition metal oxides and noble metals supported on zeolites, CeO₂, Al₂O₃ or mixtures thereof.

In U.S. Patent No. 3,840,471 [5] entitled "Catalyst comprising Platinum, Rhodium and a Base Metal," the inventor describes catalysts for the oxidation of organic molecules and the reduction of nitrogen oxides using a reducing fuel and catalysts for the production of methane by stream reforming naphtha and naphtha distillates. The proposed catalyst consists of an inert carrier which is impregnated or coated with mixture or alloy of platinum (Pt), rhodium (Rh) and a third base metal. In this catalyst Rh content is between 1 and 50 wt.%, and the base metal content is between 0.01 and 25 wt.% of the total metals. Copper is included in the list of base metals.

The continuously stringent environmental regulations in transportation emissions, as a result of global efforts to reduce greenhouse gas emissions, and the introduction of the Worldwide Harmonized Light Vehicle Test Procedure (WLTP) in the European Union (EU) have led to a constant increase in the content of noble metals (Pt, Pd, Rh) in three-way catalytic converters. This will gradually increase the gap between supply and demand of noble metals and hence, increase in their price. Consequently, the cost of a catalytic converter compatible with Euro 5 or 6 emission standards currently containing ∼ 30g/ft³ noble metals will increase significantly. Apart from the major economic impact it will have on large importers of noble metals such as the EU, it will also prevent the wide application of catalytic converters in developing countries with significant social impacts.

A novel low-cost catalyst group is described herein for the reduction of the three toxic pollutants present in gasoline engine flue gases; CO, NOₓ and CₓH_{y}, which consists of copper (Cu) and at least one noble metal. The percentage of copper in total metals may range from 50 to 90%, thus making a significant reduction in the cost of a three-way catalytic converter.

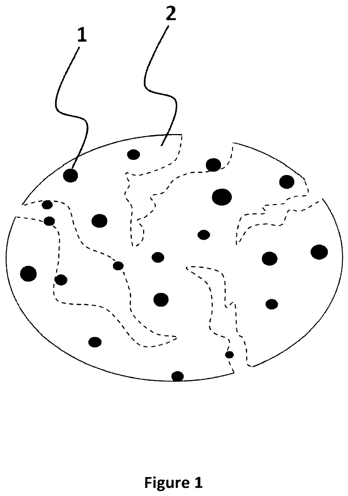

As shown in Figure 1, the metallic phase 1 is dispersed and supported on a ceramic carrier 2, based on cerium oxide (CeO₂). The mentioned carriers include solid solutions of rare earth oxides that have a significant oxygen storage capacity or a high conductivity of oxygen ions at temperatures above 150°C. In practical applications, the described herein catalysts are deposited, either directly or through an interfacial layer with large surface area, on the walls of ceramic or metallic mechanical support structures, such as cordierite monoliths.

### Description of the catalyst

### Metallic phase

A supported catalyst consisting of Cu and at least one noble metal is described herein for the treatment of engine flue gases, under nearly stoichiometric conditions aiming to effectively reduce CO, CₓH_{y} and NOₓ.

The metallic phase 1 consists of copper (Cu) and at least one of the following noble metals: platinum (Pt), palladium (Pd), rhodium (Rh), iridium (Ir), ruthenium (Ru) or gold (Au). The above listed metals may be derived from commercial precursor species, for example the metal chloride salts. The weight ratio in the metallic phase 1 ranges between 50 and 90% for Cu and between 10% and 50% for the noble metals. The size of the metallic particles can range from 1nm to 1µm when dispersed on the carrier, while the total metal loading in the catalyst may range from 1 to 15 wt.%.

### Ceramic phase - Carrier

The ceramic phase 2 - catalyst carrier is a mixed oxide that comprises cerium oxide (CeO₂) doped, stabilized, combined or mixed with at least one of the oxides of Y, Pr, Sr, Sc, La, Ti, Zr, Gd, Nb, V, Sm, Nd and Tb. The ratio of CeO₂ into the carrier varies from 40 to 90 wt.% and from 10 to 60 wt.% for all other oxides.

The ceramic phase 2 should have BET surface area of at least 40m²/g, pore volume of at least 0.2ml/g, particle size of 0.1µm to 100µm and also, oxygen storage capacity greater than 10µmol/g at 400°C. The latter material property may originate either by the inherent redox properties of the individual oxides, such as CeO₂, or by the creation of defects in the mixed oxide crystal matrix (doping process), or by combination of the above mentioned mechanisms.

### Catalyst synthesis

The synthesis of the catalyst group described herein can be accomplished by a variety of methods leading to the desired physicochemical properties of the catalyst like the desired particle size of the metallic phase 1. The synthesis methods include, but not limited to, impregnation, precipitation, inoculation, combustion or sol-gel method.

In practical applications, like flue gas treatment, the catalyst described herein is deposited on the walls of multi-tubular ceramic or metallic monolithic structures or other similar mechanical supports of catalysts. The mentioned catalyst deposition can be performed either directly on the surface of the monolith or over interfacial layers of y-Al₂O₃, SiO₂ or MgO or mixtures thereof, in order to increase the catalytic surface area. The overall thickness of the deposited layers should ideally be in the range between 10 and 500µm to limit pressure drop.

### Synergy between copper, noble metals and support

Catalytic activity tests of the described herein Cu and noble metal catalyst group have revealed that they exhibit catalytic activity and stability similar to that of commercial catalysts loaded with higher noble metal amounts.

The observed high activity and stability of the catalyst is attributed to the existence of Cu (I) species in the system and the destabilization of Cu (II) species, both due to electron transfer effects from the noble metals to copper and strong metal-support interaction phenomena. The latter could be rationalized by the formation of surface oxygen vacancies in the crystal lattice of the oxide support, or by the thermal diffusion of oxygen species (oxygen ions O^{δ-} accompanied by their counterbalancing charge into the metal) from the support onto the metal surface. The presence of these ionic species induce an increase in the work function of the metal and thus weaken the chemisorption bond strength of adsorbed electronegative species from the gas phase, or destabilize surface metal oxide species [6-7].

In addition, the ability of Ce(III) to get oxidized by steam in the temperature range 300-500°C and produce H₂(g) which can then cause the reduction of Cu(I) to Cu, plays an important role. The latter step is of particular importance since the metal Cu formed therein serves the reduction of Ce(IV) thus completing the Ce(III)/Ce(IV) oxidation cycle [8]. In the above described synergy, it is also worth mentioning the recorded steam chemisorption on the surface of CuPt bimetallic catalysts [9], thus contributing to the critical step of Ce(III) oxidation and the formation of H₂.

### Example of a catalyst

In one case of a catalyst from the described herein group of catalysts, the metallic phase **1** consists of copper (Cu), rhodium (Rh), palladium (Pd) and platinum (Pt). The metallic phase 1 is deposited by impregnation on the surface of CeZrO₄ ceramic carrier particles. This catalyst is deposited on the walls of the parallel tubes of a commercial ceramic monolithic carrier, similar to that of the commercial three-way catalysts.

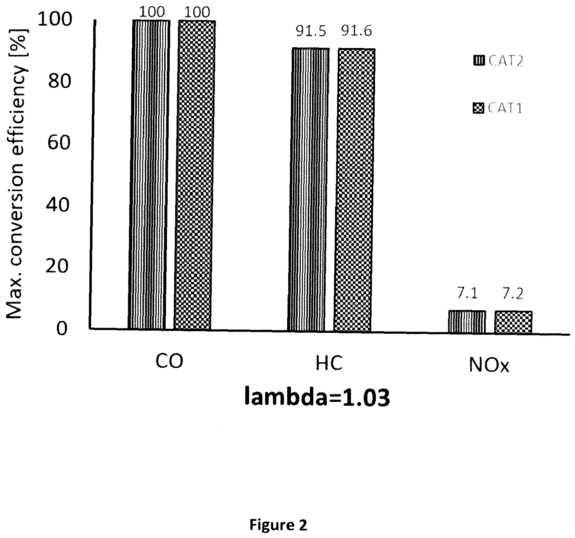

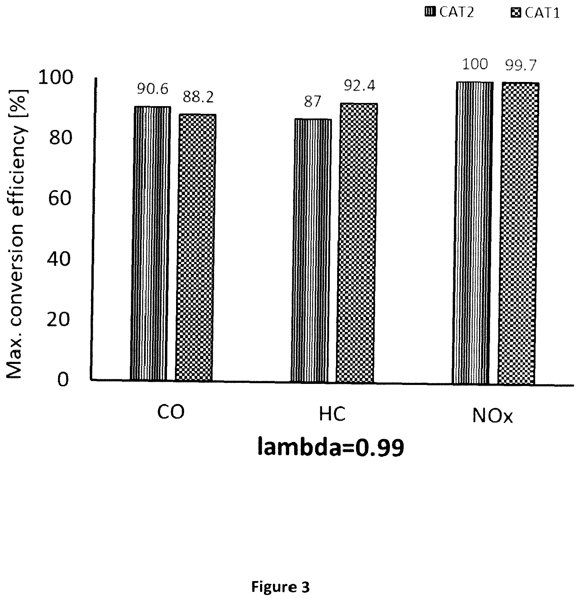

Comparative experimental results of catalytic activity of the above catalyst with Cu, Rh, Pd and Pt referred to as CAT1 and a commercial reference catalyst (CAT2) are shown in Figures 2 and 3. Catalyst CAT1 is loaded with 56% less noble metals than the catalyst CAT2 which is compatible with the Euro 6 emission standard and is loaded with 30g/ft³ of noble metals.

Figure 2 shows the maximum efficiency under engine operating conditions (>400°C) where the air/fuel ratio is 3% higher than the ratio under stoichiometric conditions (lambda=1.03), while in Figure 3 for conditions where the air/fuel ratio is 1% lower than the ratio under stoichiometric conditions (lambda=0.99). The results show the catalytic activity for the oxidation of CO and hydrocarbons (HC), as well as for the reduction reaction of NO. As shown in Figures 2 and 3, in each case catalyst CAT1 exhibits activity similar to that of the commercial catalyst CAT2 containing ∼114% more noble metals.

### Figure captions

**Figure 1****:** Schematic representation of a catalytic particle, where the dispersed metallic phase **1** (dark dots) are shown on the surface of the porous ceramic particle.
**Figure 2****:** Comparative results of catalytic activity under air/fuel ratio 3% higher than the ratio under stoichiometry (lambda=1.03), between the catalyst (CAT1) described herein and a commercial reference catalyst (CAT2) containing exclusively noble metals that is compatible with the Euro 6 emission standard for gasoline passenger vehicles.
**Figure 3****:** Comparative results of catalytic activity under air/fuel ratio 1% lower than the ratio under stoichiometry (lambda=0.99), between the catalyst (CAT1) described herein and a commercial reference catalyst (CAT2) containing exclusively noble metals that is compatible with the Euro 6 emission standard for gasoline passenger vehicles.

### Literature

1. R.E. Bedford, W.J. LaBarge, *Base metal automotive exhaust catalyst with improved activity and stability and method of making the catalysts,* US 5,063,193 (1991).
2. L. Shore, W.F. Ruettinger, R.J. Farrauto, *Platinum group metal promoted copper oxidation catalysts and methods for carbon monoxide remediation,* US 2002/0131915 A1 (2002).
3. X. Hao, J. Cai, *Engine exhaust catalysts containing copper-ceria,* US 2011/0143921 A1 (2011).
4. *S-E. Park, G-M. Kim, Y-J. Lee, J-S. Chang, S-H. Han, Method for removing nitrogen oxides in exhaust gas by selective catalytic reduction and catalyst for reduction of nitrogen oxides,* US 5,879,645 (1999).
5. G.J.K. Acres, Catalyst comprising platinum, rhodium and a base metal, US 3,840,471 (1974).
6. J. Nicole, D. Tsiplakides. C. Pliangos, X.E. Verykios, Ch. Comninellis, C.G. Vayenas, Electrochemical Promotion and Metal-Support Interactions, J Catal 204(1) (2001) 23-34.
7. P. Vernoux, L. Lizarraga, M.N. Tsampas, F.M. Sapountzi, A. De Lucas-Consuegra, J.-L. Valverde, S. Souentie, C.G. Vayenas, D. Tsiplakides, S. Balomenou, E.A. Baranova, lonically Conducting Ceramics as Active Catalyst Supports, Chem Rev 113(10) (2013) 8192-8260.
8. G.S. Zafiris, R.J. Gorte, Evidence for Low-Temperature Oxygen Migration from Ceria to Rh, J Catal 139 (1993) 561-567.
9. J. Knudsen, A.U. Nilekar, R.T. Vang, J. Schnadt, E.L. Kunkes, J.A. Dumesic, M. Mavrikakis, F Besenbacher, A Cu/Pt Near-Surface Alloy for Water- Gas Shift Catalysis, J Am Chem Soc 129 (2007) 6485-6490.

## Claims

1. A supported polymetallic catalyst for engine flue gas treatment having air/fuel ratio in the range from 0.95 to 1.10 of the stoichiometric air/fuel ratio, which is consisted of a metallic phase **1** at a weight ratio ranging from 1 to 15%, comprising 50-90wt.% copper (Cu) and at least one noble metal selected from the list of platinum (Pt), palladium (Pd), rhodium (Rh), iridium (Ir), ruthenium (Ru) and/or gold (Au), which is supported on the surface of a porous ceramic phase **2**, comprising 40 to 90wt.% CeO₂ doped, stabilized, combined or mixed with at least one oxide of the transition metals selected from the list of Y, Pr, Sr, Sc, La, Ti, Zr, Gd, Nb, V, Sm, Nd and/or Tb, where phase **2** exhibits BET surface area above 40m²/g, pore volume above 0.2ml/g, particle size between 0.1 µm and 100µm and oxygen storage capacity higher than 10µmolO₂/g at 400°C.

2. A supported polymetallic catalyst for engine flue gas treatment having air/fuel ratio in the range from 0.95 to 1.10 of the stoichiometric air/fuel ratio according to claim 1, which is deposited as a thin continuous or discontinuous layer, with thickness from 1µm to 500µm, on the walls of tubes serving the flow management of flue gases, of ceramic or metallic monolithic carrier with honeycomb structure.

3. A supported polymetallic catalyst for engine flue gas treatment having air/fuel ratio in the range from 0.95 to 1.10 of the stoichiometric air/fuel ratio according to claim 1, which is deposited as a thin continuous or discontinuous layer, with thickness from 1µm to 500µm, on thin interfacial layer of an oxide selected from the list of Al₂O₃, SiO₂, MgO or mixtures thereof with BET surface above 100m²/g, which is deposited on the walls of tubes serving the flow management of flue gases, of ceramic or metallic monolithic carrier with honeycomb structure.

4. A monolithic structure polymetallic catalyst for engine flue gas treatment having air/fuel ratio in the range from 0.95 to 1.10 of the stoichiometric air/fuel ratio according to claims 2 or 3, which is placed into metallic or ceramic or other similar refractory casing having a flue gas inlet and outlet.

5. A process for treatment of engine flue gases, having air/fuel ratio in the range from 0.95 to 1.10 of the stoichiometric air/fuel ratio, utilizing an encased monolithic polymetallic catalyst according to claim 4, installed online the flue gas management system in flow contact with and downstream of the engine exhaust manifold.
